# EUROPEAN PATENT APPLICATION

(11) **EP 1 674 860 A2**
(43) Date of publication of application: **28.06.2006**
(21) Application number: 05257839.0
(22) Date of filing: 20.12.2005
(51) Int. Cl.: G01N 27/90

(54) **Eddy current array probes with enhanced drive fields**

(30) Priority: 22.12.2004 US 23179
(71) Applicant: GENERAL ELECTRIC COMPANY, Schenectady, NY 12345 (US)
(72) Inventor: Wang, Changting, Schenectady New York 12306 (US); Plotnikov, Yuri Alexeyevich, Niskayuna New York 12309 (US); Mcknight, William Stewart, Hamilton Ohio 45013 (US); Nath, Shridhar Champaknath, Niskayuna New York 12309 (US); Gambrell, Gigi Olive, West Chester Ohio 45069 (US); Togo, Mottito, Bangalore Karnataka 560066 (IN); Hennessy, William Andrew, Schenactady New York 12303 (US); Ertel, John William, New Vienna Ohio 45159 (US); Mandayam, Shyamsunder Tondanur, Bangalore Kamataka 560084 (IN)
(74) Representative: Pedder, James Cuthbert

(57) **Abstract**

Several eddy current array probes (ECAP) with enhanced drive coil configurations are described. In one arrangement, an ECAP (10) includes a number of EC channels (12) and a number of drive coils (14). Each of the drive coils is provided for a respective one of the EC channels. The drive coils have alternating polarity with respect to neighboring drive coils. In another arrangement, an ECAP (40) for detecting flaws in a number of scanning and orientation configurations includes at least one substrate (32), a number of sense coils (16, 18) arranged on the substrate(s), and a drive coil (14) encompassing all of the sense coils. In another arrangement, an ECAP includes a substrate sense coils arranged in at least two rows, and at least one drive line. One drive line is provided for each pair of rows and disposed between the rows.

## Description

The present invention relates generally to eddy current inspection and, more specifically, to eddy current array probes for non-destructive testing of conductive materials.

Eddy current inspection is a commonly used technique for non-destructive testing of conductive materials for surface flaws. Eddy current inspection is based on the principle of electromagnetic induction, wherein a drive coil carrying currents induces eddy currents within a test specimen, by virtue of generating a primary magnetic field. The eddy currents so induced in turn generate a secondary magnetic field, which induces a potential difference in the sense coils, thereby generating signals, which may be further analyzed for flaw detection. In the case of a flaw in the test specimen, as for example, a crack or a discontinuity, the eddy current flow within the test specimen alters, thereby altering the signals induced in the sense coils. This deviation in the signals is used to indicate the flaw.

Conventional eddy current array probes (ECAPS) have limited sensitivity for detection of cracks aligned perpendicular to a scanning direction of the ECAP. In particular, detection between neighboring eddy current (EC) channels is an issue for conventional ECAPs. However, for compressor disks, aircraft wheels and other geometries of revolution, radial cracks are typically oriented perpendicular to the scanning direction of the ECAP. In summary, weak detection spots exist for flaws due to sensitivity variations across the sensitive area of conventional arrays.

It would therefore be desirable to provide eddy current array probes with an improved and more uniform sensitivity to radial, axial, or circumferential surface cracks. It would further be desirable to reduce channel-to-channel variations across the array.

An aspect of the present invention resides in an eddy current (EC) probe that includes a number of EC channels and a number of drive coils. Each of the drive coils is provided for a respective one of the EC channels. The drive coils have alternating polarity with respect to neighboring drive coils.

Another aspect of the invention resides in an eddy current (EC) array probe (ECAP) for inspecting a component. The ECAP includes at least one substrate, a number of sense coils arranged on the substrate(s), and a drive coil encompassing all of the sense coils. The drive coil is configured to generate a probing field in a vicinity of the sense coils, and the sense coils are configured to generate response signals corresponding to the eddy currents generated in the component in response to the probing field.

Yet another aspect of the invention resides in an eddy current (EC) array probe (ECAP) for inspecting a component. The ECAP includes at least one substrate and a number of sense coils arranged on the substrate(s). The sense coils are arranged in at least two rows. The ECAP further includes at least one drive line for each pair of rows, which is disposed between the rows. Each of the drive lines is configured to generate a probing field in a vicinity of the respective pair of rows. The sense coils are configured to generate response signals corresponding to the eddy currents generated in the component in response to the probing field.

The invention will now be described in greater detail, by way of example, with reference to the drawings, in which:-
FIG. 1 is a top view of a first eddy current probe embodiment of the invention;
FIG. 2 is an exemplary side view of the eddy current probe of FIG. 1 taken along the line A-A;
FIG. 3 is a top view of the eddy current probe of FIGS. 1 and 2 with corrective drive coils;
FIG. 4 is a top view of an exemplary eddy current probe with EC channels offset relative to one another;
FIG. 5 is a top view of an eddy current array probe with a drive coil that encompasses all of the sense coils;
FIG. 6 illustrates one embodiment of the invention that creates a shaped eddy current field and which is referred to as a line-drive eddy current array probe; and
FIG. 7 shows another aspect of the eddy current array probe embodiment of FIG. 6, with three drive lines being provided for a pair of rows of sense coils.

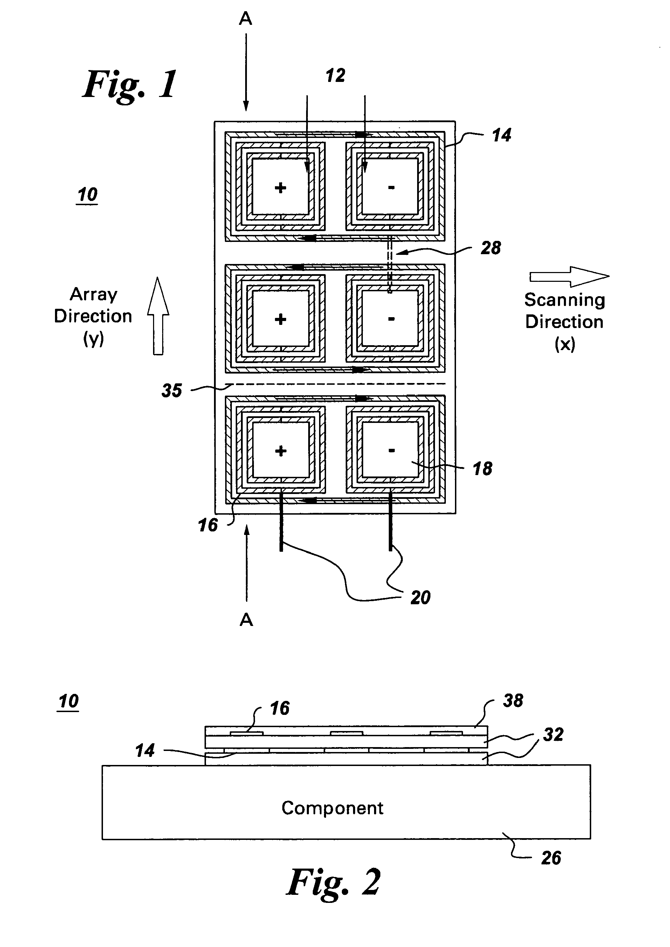

A first eddy current (EC) probe 10 embodiment of the invention is described with reference to FIGS. 1-3. As shown for example in FIG. 1, EC probe 10 includes a number of EC channels 12 and a number of drive coils 14. Each of the drive coils 14 is provided for a respective one of the EC channels 12. EC probe 10 may have any number of EC channels 12 and corresponding drive coils 14, and this number will vary based on the application. As indicated by arrows in FIG. 1, the drive coils 14 have alternating polarity with respect to neighboring drive coils 14. The arrows in FIG. 1 show exemplary current directions for the drive coils 14. The alternating polarity of the drive coils 14 causes the current (shown by arrows) in neighboring drive coils 14 to flow in the same direction near the boundary 35 between a pair of neighboring drive coils 14 with current in opposite directions. These parallel currents give rise to the constructive superposition of magnetic fields near the interface 35, which enhances the eddy current density near the interface 35, which increases the sensitivity of the EC probe 10.

For the exemplary embodiment shown in FIG. 1, each of the EC channels 12 includes a first sense coil 16 and a second sense coil 18. As shown, the first sense coil 16 has one polarity, and the corresponding second sense coil 18 has the opposite polarity. The polarities are indicated by + and - signs, and the arrangement of sense coils with + and - signs shown in FIG. 1 is illustrative. The polarities of the sense coils may also be reversed, for example. Each of the drive coils 14 is configured to generate a probing field for the respective one of EC channels 12 in a vicinity of the first and second sense coils 16, 18. For the exemplary embodiment of FIG. 1, each of the drive coils 14 extends around the first and second sense coils 16, 18 forming the respective EC channel 12.

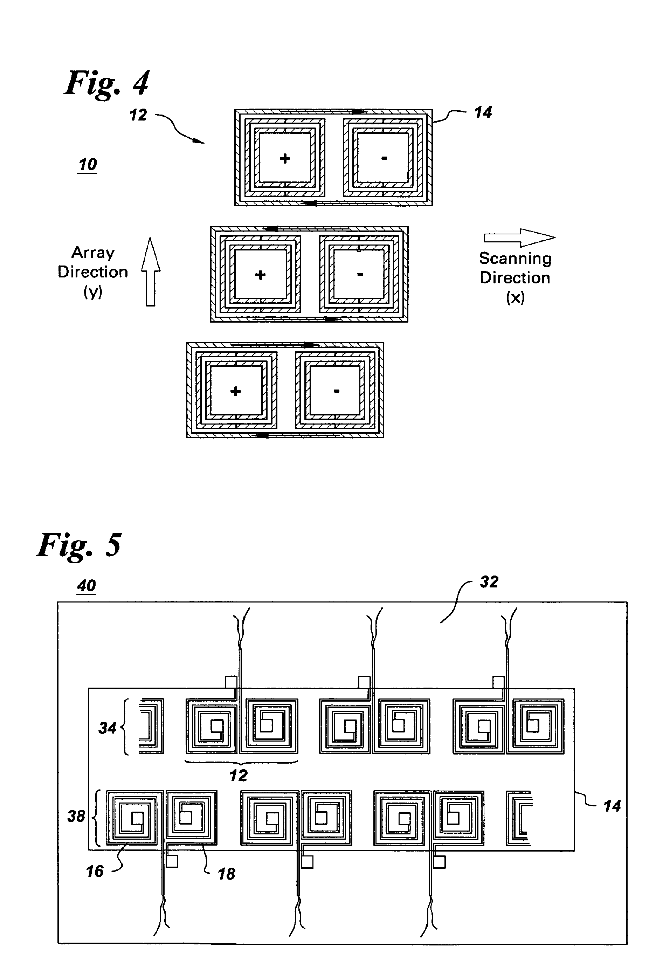

As shown for example in FIG. 1, each of the first sense coils 16 and second sense coils 18 are disposed along a scanning direction (x) relative to one another, and the EC channels 12 form an array oriented along an array direction (y), which is substantially perpendicular to the scanning direction (x). By "substantially perpendicular," it is meant that the array direction and scanning direction are oriented between about 75-105 degrees relative to one another. In FIG. 1, the scanning and array directions (x,y) are perpendicular (ninety degrees). Although the EC channels 12 are shown in FIG. 1 as being perfectly aligned along the array direction (y), the EC channels 12 may also be offset relative to one another as shown for example in FIG. 4.

Operationally, the drive coils 14 excite and generate magnetic flux (probing fields). The magnetic field influx into a conductive component 26 (exemplarily shown in side view in FIG. 2) generates an eddy current on the surface of the component 26, which in turn generates a secondary magnetic field. In the case of a surface flaw (not shown), the secondary magnetic field deviates from its normal orientation when no flaw is present, to a direction corresponding to the flaw orientation. This deviant secondary magnetic field induces corresponding signals (sense signals) in the sense coils 16, 18, thereby indicating the presence of the surface flaw. As noted above, cracks perpendicular to the scan direction 28 are difficult to detect and quantify using conventional probes. However, the EC probe 10 of the present embodiment provides enhanced signal strength due to the channel orientation and the alternating polarity of neighboring drive coils 14, which enables detection and quantification of cracks oriented perpendicular to the scanning direction (x).

The exemplary EC probe 10 shown in FIG. 1 has a rectangular configuration. Namely, each of the first and second sense coils 16, 18 is rectangular, each of the EC channels 12 is rectangular, and each of the drive coils 14 is rectangular. Beneficially, the rectangular configuration enhances the constructive superposition of the magnetic fields generated by neighboring drive coils 14 near interfaces 35 because the currents in the drive coils 14 are parallel along the entire length of the drive coils at the interfaces 35. However, other polygonal configurations can also be employed, such as a parallelogram.

For the exemplary embodiment shown in FIG. 2, EC probe 10 includes a number of flexible substrates 32, and the drive coils 14 and sense coils 16, 18 are formed on different ones of the substrates. The drive coils may be formed on one or several substrates, and the sense coils 16, 18 may be formed on one or several substrates. EC probe 10 may further include a protective layer 38 to protect the coils 16, 18, 14. The substrates 32 and protective layer are desirably formed of a flexible material, such as a flexible organic polymer. An exemplary flexible organic polymer is polyimide, one example of which is KAPTON®, which is a federally registered trademark of E.I. du Pont de Nemours and Company of Wilmington, Deleware. An exemplary substrate 32 has a thickness of about 25 □m to about 100 □m, for example a 25 □m KAPTON ® substrate. Advantageously, a flexible substrate is easy to process and is robust. The sense and drive coils are formed of conductive materials, examples of which include copper, silver, gold and platinum. The coils can be formed using photolithography techniques that are capable of achieving precision and uniformity at small dimensions. An overview of an exemplary fabrication process is presented in commonly assigned, U.S. Patent No. 5,389,876, Hedengren et al., entitled "Flexible eddy current surface measurement array for detecting near surface flaws in a conductive part."

EC probe 10 includes electrical connections 20 operatively connecting respective ones of the first and second sense coils 16, 18. For a differential sensing embodiment, electrical connections 20 are configured to perform differential sensing. For an absolute sensing embodiment, electrical connections 20 can be configured to perform absolute sensing. Exemplary electrical connections 20 are shown in FIG. 1 only for the lower-most EC channel 12. Electrical connections 20 are formed on the substrates and can extend between the substrates 32, and can be formed of conductive materials such as copper, silver, gold and platinum using high density interconnect (HDI) techniques, for example.

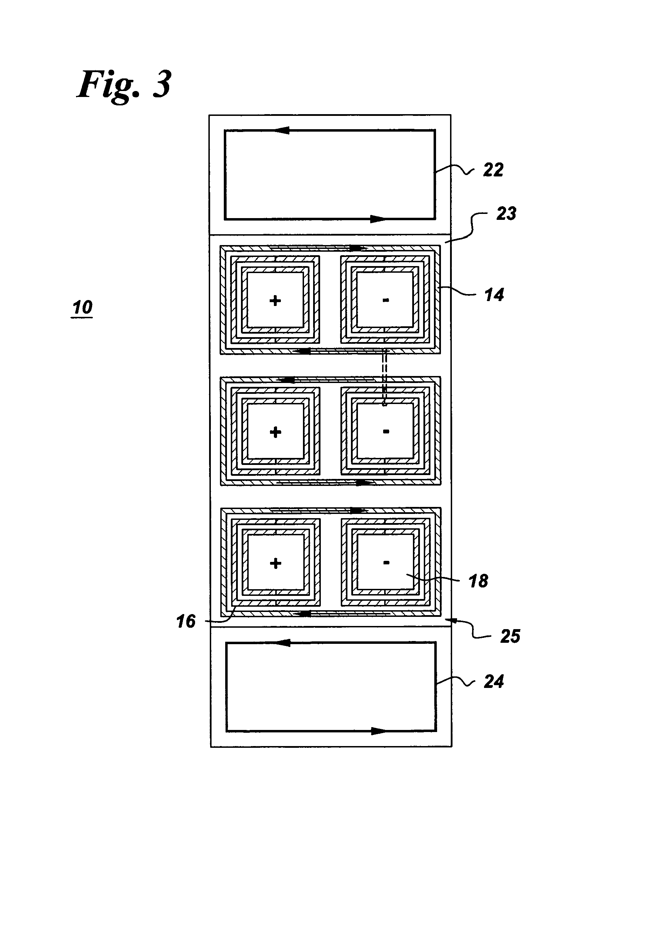

In addition to the probing field generated by the drive coil 14 associated with a given EC channel 12, the portion of the component 26 being inspected by the EC channel 12 is also affected by the probing fields of the neighboring drive coils 14. Accordingly, absent any corrective measures, the portions of the component 26 being inspected by the first and last EC channels 12 in the EC probe 10 would not feel the same probing field as that felt by the intermediate EC channels 12 because each of these EC channels 12 has only one (1) neighboring EC channel 12, whereas each of the other EC channels 12 has two (2) neighboring EC channels. For convenience, the EC probes 10 depicted in FIGS. 1 and 3 have only three EC channels 12. However, EC probe 10 may include any number of EC channels 12, for example twenty-four (24) EC channels 12. To correct for this imbalance, the EC probe 10 shown in FIG. 3 further includes a pair of corrective drive coils 22, 24. A first one of the corrective drive coils 22 is disposed at a first end 23 of the EC channels 12, and a second one of corrective drive coils 24 is disposed at a second end 25 of the EC channels 12. Each of the corrective drive coils 22, 24 is configured to generate a probing field. Beneficially, the corrective drive coils 22, 24 improve the sensitivity of the first and last EC channels 12.

An eddy current array probe (ECAP) 10 is described with reference to FIGS. 1-3. As indicated in FIG. 3, ECAP 10 includes a number of EC channels 12, each comprising a first sense coil 16 and a second sense coil 18. As indicated in FIG. 1, the sense coils 16, 18 have opposite polarities and are disposed along a scanning direction (x) relative to one another. The EC channels 12 form an array oriented along an array direction (y), which is substantially perpendicular to the scanning direction (x). ECAP 10 further includes a number of drive coils 14, each drive coil being provided for a respective EC channel 12 and being configured to generate a probing field for the respective EC channel 12 in a vicinity of the first and second sense coils 16, 18. The drive coils 14 have alternating polarity with respect to neighboring drive coils 12, as indicated in FIG. 1. For one embodiment, all drive coils are connected in series to be driven by one source. According to a more particular embodiment, ECAP 10 further includes electrical connections 20 operatively connecting respective ones of the first and second sense coils 16, 18, and each of the drive coils 14 extends around the first and second sense coils 16, 18 forming the respective EC channel 12. For a differential sensing embodiment, electrical connections 20 are configured to perform differential sensing. Namely, the response signals are processed to generate a number of differential sense signals. The differential sense signals may be analyzed to determine whether a radial crack 28 is present in the component 26.

For the rectangular configuration of FIGS. 1 and 3, each of the first and second sense coils 16, 18 is rectangular, each of the EC channels 12 is rectangular, and each of the drive coils 14 is rectangular. This rectangular configuration enhances the superposition of the magnetic fields generated by neighboring drive coils 14, which in turn enhances the sensitivity of ECAP 10.

As used herein the term "radial crack" should be understood to mean a crack that is oriented substantially perpendicular to the scanning direction (x) of the EC probe. By "substantially perpendicular," it is meant that the radial crack is oriented at an angle within a range of 75 ° -105° relative to the scanning direction (x). For example, the exemplary crack 28 shown in FIG. 1 is oriented at a 90° angle relative to the scanning direction (x). An "axial or circumferential crack" should be understood to mean a crack that is oriented substantially parallel to the scanning direction (x) of the EC probe. By "substantially parallel," it is meant that the axial or circumferential crack is oriented at an angle within a range of-15° to 15° relative to the scanning direction (x).

Radial cracks 28 can be difficult to detect using probe configurations because of the sensitivity variations between adjacent channels conventional probes. However, by employing probing fields of alternating polarity, the magnetic fields add constructively near the interface 35 between adjacent channels. This superposition enhances the eddy current density and uniformity near the interface 35, which provides for more uniform and increase sensitivity in this region, better enabling the detection of flaws.

Another ECAP 40 embodiment of the invention for flaw detection is described with reference to FIG. 5. As shown for example in FIG. 5, the ECAP 40 includes at least one substrate 32, a number of sense coils 16, 18 arranged on at least one substrate 32, and a drive coil 14 encompassing all of the sense coils 16, 18. The drive coil 14 is configured to generate a probing field in a vicinity of the sense coils 16, 18, and the sense coils 16, 18 are configured to generate a number of response signals corresponding to the eddy currents generated in the component 26 in response to the probing field.

As used herein, the term "encompassing" should be understood to mean that the drive coil 14 extends around the sense coils 16, 18 in essentially a closed-loop, as shown for example in FIG. 5 and in contrast with known serpentine drive coil configurations as taught in US. Patent No. 5,389,876, Hedengren et al, entitled "Flexible eddy current surface measurement array for detecting near surface flaws in a conductive part." Exemplary serpentine drive coil configurations are shown in Figs. 1 and 4 of Hedengren et al.

For the exemplary embodiment of FIG. 5, sense coils 16, 18 are arranged as a number of EC channels 12. Each of the EC channels 12 is formed of a first and a second one of the sense coils 16, 18, where the first ones of sense coils 16 differ in polarity from the second ones of sense coils 18, as indicated in FIG. 5 by the direction of the coil windings. More particularly, EC channels 12 are arranged in a number of rows 34, and drive coil 14 encompasses all of the rows 34, as shown in FIG. 5, for example. The arrangement of FIG. 5 both improves sensitivity and uniformity, channel-to-channel sensitivity variations across the array are reduced with less dependence on where the flaw encounters a particular, and simplifies the footprint for image processing, relative to configurations with separate drive coils for each EC channel. For the exemplary embodiment of FIG. 5, the EC channels 12 of one of the rows 34 are staggered relative to the EC channels of the other of the rows 34. Beneficially, this staggering provides complementary or redundant sensing.

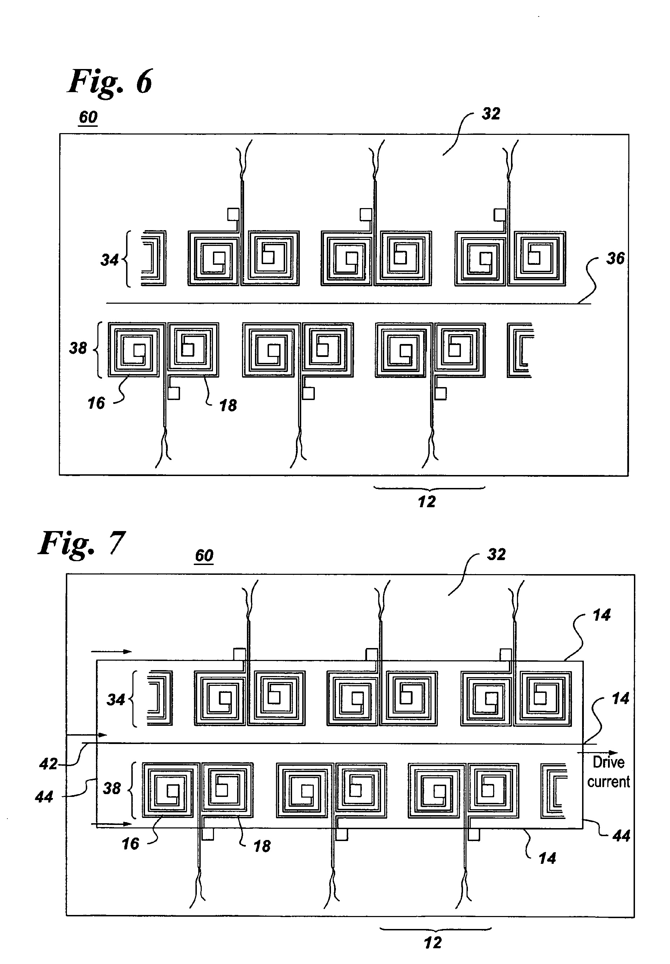

A line-drive eddy current ECAP 60 embodiment of the invention is described with reference to FIG. 6. As shown for example in FIG. 6, ECAP 60 includes at least one substrate 32 and a number of sense coils 16, 18 arranged on at least one substrate, where the sense coils 16, 18 are arranged in at least two rows 34. ECAP 60 further includes at least one drive line 36. For the arrangement of FIG. 6, one drive line 36 is provided for each pair of rows 34 and is disposed between the respective rows 34. Each of the drive lines 36 is configured to generate a probing field in a vicinity of the respective pair of rows 34, and the sense coils 16, 18 are configured to generate a number of response signals corresponding to the eddy currents generated in the component 26 in response to the probing field. The arrangement of FIG. 6 improves sensitivity uniformity, relative to configurations with separate drive coils for each EC channel. In addition, the arrangement of FIG. 6 further simplifies the circuitry and the footprint as compared to the configuration of FIG 5.

As discussed above with respect to FIG. 2, for a multilayer embodiment, ECAP 60 includes a number of flexible substrates 32, where drive-lines 36 are disposed on different substrates 32 than are the rows 34 of sense coils 16, 18. Alternatively, at least one of the drive-lines 36 and at least one of the rows 34 are formed on the same substrate 32.

For the configuration of FIG. 6, the sense coils 16, 18 are arranged as a number of EC channels 12, which are described above. As shown the EC channels 12 are formed in multiple rows 34, and the EC channels 12 of one of the rows 34 are staggered relative to the EC channels of another of the rows. This staggering provides complementary sensing.

As noted above, ECAP 60 has at least one drive line 36 for each pair of rows of sense coils. For the configuration shown in FIG. 7, ECAP 60 has three drive lines 36. As shown, one of the drive lines 36 is disposed between the rows 34, 38 of sense coils 16, 18. One of the drive lines 36 is positioned above the rows, and another of the drive lines is positioned below the rows. For the exemplary configuration of FIG. 7, the three drive lines 36 are driven from a common source line 42. Alternatively, connecting lines 44 may be removed and the drive lines 36 may be driven by separate sources (not shown).

## Claims

1. An eddy current (EC) probe (10) comprising:
a plurality of EC channels (12), wherein each of said EC channels comprises a first sense coil (16) and a second sense coil (18), wherein said first sense coil has one polarity, and said second sense coil has an opposite polarity; and
a plurality of drive coils (14), wherein each of said drive coils is provided for a respective one of each of said EC channels, wherein said drive coils have alternating polarity with respect to neighboring drive coils, and wherein each of said drive coils is configured to generate a probing field for the respective one of said EC channels in a vicinity of said first and second sense coils.

2. The EC probe (10) of Claim 1, wherein each of said drive coils (14) extends around said first and second sense coils (16, 18) forming the respective one of said EC channels (12), wherein each of said first sense coils and said second sense coils are disposed along a scanning direction (x) relative to one another, and wherein said EC channels form an array oriented along an array direction (y) which is substantially perpendicular to the scanning direction (x).

3. The EC probe (10) of Claim 2, further comprising:
a pair of corrective drive coils (22, 24), wherein a first one of said corrective drive coils (22) is disposed at a first end (23) of said EC channels (12), wherein a second one of said corrective drive coils (24) is disposed at a second end (25) of said EC channels, wherein each of said corrective drive coils is configured to generate a probing field,
wherein each of said first and second sense coils (16, 18) is rectangular, wherein each of said EC channels is rectangular, and wherein each of said drive coils (14) is rectangular.

4. The EC probe (10) of Claim 2, further comprising a plurality of electrical connections (20) operatively connecting respective ones of said first and second sense coils (16, 18) and configured to perform at least one of differential sensing and absolute sensing.

5. An eddy current (EC) array probe (ECAP) (40) for inspecting a component (26) for flaws, said ECAP comprising:
at least one substrate (32);
a plurality of sense coils (16, 18) arranged on said at least one substrate; and
a drive coil (14) encompassing all of said sense coils, wherein said drive coil is configured to generate a probing field in a vicinity of said sense coils, and
wherein said sense coils are configured to generate a plurality of response signals corresponding to a plurality of eddy currents generated in the component in response to the probing field.

6. The ECAP (40) of Claim 5 comprising a plurality of flexible substrates (32), wherein said drive coil (14) is formed on a different one of said flexible substrates than are said sense coils (16, 18).

7. The ECAP (40) of Claim 5, wherein said sense coils are arranged as a plurality of EC channels (12), each of said EC channels comprising a first and a second one of said sense coils (16, 18), wherein the first ones of said sense coils differ in polarity from the second ones of said sense coils, wherein said EC channels (are arranged in a plurality of rows (34), and wherein said drive coil encompasses all of said rows.

8. An eddy current (EC) array probe (ECAP) (60) for inspecting a component (26) for flaws, said ECAP comprising:
at least one substrate (32);
a plurality of sense coils (16, 18) arranged on said at least one substrate, wherein said sense coils are arranged in at least two rows (34, 38); and
at least one drive line (36), wherein one drive line is provided for each pair of rows and disposed between said rows, wherein each of said drive lines is configured to generate a probing field in a vicinity of said pair of rows, and
wherein said sense coils are configured to generate a plurality of response signals corresponding to a plurality of eddy currents generated in the component in response to the probing field.

9. The ECAP (60) of Claim 8 comprising a plurality of flexible substrates (32), wherein said drive lines (36) and said rows (34) of sense coils (16, 18) are disposed on different ones of said flexible substrates, wherein said sense coils are arranged as a plurality of EC channels (12), each of said EC channels comprising a first and a second one of said sense coils, wherein the first ones of said sense coils differ in polarity from the second ones of said sense coils, and wherein said EC channels of one of the rows are staggered relative to said EC channels of the other of said rows.

10. The ECAP (60) of Claim 8, comprising at least three drive lines (36),
wherein one of said drive lines is disposed between said rows (34, 38) of sense coils (16, 18), wherein one of said drive lines is positioned above said rows, and wherein another of said drive lines is positioned below said rows.
